# EUROPÄISCHE PATENTSCHRIFT

(11) **EP 2 124 520 B1**
(45) Veröffentlichungstag und Bekanntmachung des Hinweises auf die Patenterteilung: **21.10.2015**
(21) Anmeldenummer: 08716087.5
(22) Anmeldetag: 28.02.2008
(51) Int. Cl.: A01G 3/06

(54) **MESSERANTRIEB FÜR EINE GRASSCHERE**
BLADE DRIVE FOR EDGING SHEARS
ENTRAÎNEMENT DE LAME CONÇU POUR DES CISEAUX À PELOUSE

(30) Priorität: 15.03.2007 DE 102007013477; 09.08.2007 DE 102007038796
(43) Veröffentlichungstag der Anmeldung: 02.12.2009
(73) Patentinhaber: HUSQVARNA AB, 561 82 Huskvarna (SE)
(72) Erfinder: REH, Bernhard, 89150 Laichingen (DE); KEIM, Norbert, 89281 Altenstadt (DE); LAMELI, Peter, 72622 Nürtingen (DE); ALEKER, Hubert, 89597 Munderkingen (DE); HÄUFELE, Reiner, 88471 Laupheim (DE); LOCHER, Ottmar, 89079 Ulm (DE); REICHART, Vincent, 89075 Ulm (DE); SCHIEDT, Christoph, 88483 Burgrieden (DE)
(74) Vertreter: Finkele, Rolf
(86) Internationale Anmeldenummer: PCT/EP2008/001556
(87) Internationale Veröffentlichungsnummer: WO 2008/110265

(56) Entgegenhaltungen:
- EP-A- 0 215 387
- DE-B- 1 212 342
- DE-C1- 3 916 145

## Beschreibung

Die Erfindung betrifft einen Messerantrieb für eine Grasschere umfassend einen Messersatz mit einem feststehenden Messer und einem bewegbaren Messer und eine Lagervorrichtung, wobei der Messersatz mittels der Lagervorrichtung um eine im Wesentlichen parallel zu einer Schneidebene angeordnete, in eine Schneidrichtung gerichtete Drehachse schwenkbar gelagert ist. Die Erfindung betrifft weiter eine Grasschere mit einem Messerantrieb.

Bei einer Grasschere, insbesondere einer Handgrasschere oder einer Stiel-Grasschere, wird ein bewegbares Messer oder Scherblatt beim Schneiden relativ zu einem feststehenden Messer um eine Schwenkachse verschwenkt und so das zwischen Schneidkanten der Messer befindliche Gras oder dergleichen geschnitten. Üblicherweise wird die Grasschere dabei derart gehalten, dass die Schwenkachse im Wesentlichen vertikal ausgerichtet ist. Die Grasschere wird in eine sogenannte Schneidrichtung über einen Untergrund bewegt, beispielsweise entlang einer Rasenkante. Bei einer Schwenk- oder Schneidbewegung wird das bewegbare Messer je nach Gestaltung der Grasschere im Uhrzeigersinn oder entgegen des Uhrzeigersinns verschwenkt. Schwenkt das Messer im Uhrzeigersinn so bewirkt dies tendenziell, dass das geschnittene Gras in Schneidrichtung nach rechts ausgeworfen wird. Eine Schwenkbewegung des bewegbaren Messers entgegen dem Uhrzeigersinn erzeugt dagegen tendenziell einen Grasauswurf nach links, in Schneidrichtung der Grasschere betrachtet. Aufgrund dieser tendenziellen Grasauswurfrichtung wird eine Grasschere häufig durch einen Nutzer in einer bevorzugten Schneidrichtung ausgerichtet und in dieser eingesetzt. So kann beispielsweise an einer Rasenkante die Grasschere so ausgerichtet werden, dass das abgeschnittene Gras auf einen angrenzenden Weg und nicht in den Rasen fällt. Eine Ausrichtung und Verwendung einer Grasschere in eine bestimmte Schneidrichtung ist jedoch nicht in allen Lagen des zu schneidenden Rasens und/oder für Linkshänder und Rechtshänder gleichermaßen komfortabel.

Aus der DE 1 212 342 ist eine Handgrasschere mit einem festen und einem bewegbaren Messer bekannt, wobei das feststehende Messer über einen Winkel an einer Stirnseite eines feststehenden Griffteils mittels einer Durchführungsbuchse schwenkbar gelagert ist, eine Zugstange zur Bewegung des bewegbaren Messers axial durch die Durchführungsbuchse geführt ist und eine Schneidebene der Messer um eine koaxial zu der Zugstange liegende Achse schwenkbar ist. Durch Verschwenken der Schneidebene um 180° ist bei einer derartigen Grasschere zwar eine Umkehrung einer Schneidrichtung denkbar, dabei wird jedoch der Abstand der Schneidebene der Messer von einer Gehäuseunterkante und damit von einem Boden sehr stark variiert. Da eine Grasschere üblicherweise über das Gehäuse, über Rollen und/oder Kufen entlang einer Untergrundfläche verschoben oder mit der Gehäuseunterseite auf eine Untergrundfläche aufgesetzt wird, bestimmt der Abstand der Schneidebene von der Gehäuseunterkante eine Höhe eines geschnittenen Grases. Bei einer Grasschere gemäß DE 1 212 342 wäre somit die Höhe des geschnittenen Grases von einer Schneidrichtung abhängig, in welcher die Grasschere eingesetzt wird.

Es ist eine Aufgabe der vorliegenden Erfindung, einen Messerantrieb für eine Grasschere mit einem um eine Drehachse verschwenkbaren Messersatz zu schaffen, wobei eine Schnitthöhe im Wesentlichen unabhängig von einer Schwenkstellung des Messersatzes ist. Eine weitere Aufgabe der Erfindung ist es, eine Grasschere mit einem entsprechenden Messerantrieb zu schaffen.

Die Aufgabe wird durch einen Messerantrieb für eine Grasschere gelöst, umfassend einen Messersatz mit einem feststehenden Messer und einem bewegbaren Messer und eine Lagervorrichtung, wobei der Messersatz mittels der Lagervorrichtung um eine im Wesentlichen parallel zu einer Schneidebene angeordnete, in eine Schneidrichtung gerichtete Drehachse schwenkbar gelagert ist und die Drehachse zumindest annähernd in der Schneidebene liegt.

Als die "Schneidrichtung" eines Messersatzes wird dabei eine Richtung bezeichnet, in welche der Messersatz zum Schneiden von Gras oder dergleichen im Einsatz im Wesentlichen bewegt wird. Die Schneidrichtung kann insbesondere im Wesentlichen parallel zur Richtung der Schneidkante des feststehenden Messers verlaufen. Die Achse, um welche das bewegbare Messer relativ zu dem feststehenden Messer verschwenkbar ist, wird als Schwenkachse bezeichnet. Als Schneidebene wird im Sinne der Erfindung im Allgemeinen eine im Wesentlichen senkrecht zu der Schwenkachse angeordnete Ebene bezeichnet, in welcher eine Schneidkante des feststehenden Messers im Wesentlichen liegt. Eine Schneidkante des bewegbaren Messers kann bei geöffneter Schere mit der Schneidkante des feststehenden Messers einen Winkel einschließen. Beim Schließen der Schere gleitet üblicherweise für einen guten Schnitt die Schneidkante des bewegbaren Messers entlang der Schneidkante des feststehenden Messers, wodurch die Messer in Deckung zueinander gebracht werden. Eine Höhe einer Schnittkante von geschnittenem Gras oder dergleichen ist somit im Wesentlichen von einem Abstand der Schneidkante des feststehenden Messers von einem Untergrund abhängig. Beim Schneiden kann das feststehende Messer aufgrund von einwirkenden Kräften durchgebogen werden, so dass die Schneidkante des feststehenden Messers nicht länger in einer Ebene liegt, die im Wesentlichen parallel zu dem Untergrund abgeordnet ist. Diese Durchbiegung ist jedoch üblicherweise vernachlässigbar. Bei stärkeren Durchbiegungen ist es denkbar, die Schneidebene als eine Ausgleichsebene durch einen Schnittpunkt des feststehenden Messers mit der Schwenkachse zu definieren, welche senkrecht zu der Schwenkachse angeordnet ist.

Im üblichen Gebrauch des Messersatzes ist die Schneidebene parallel zu einem Untergrund angeordnet. Die parallel zur Schneidebene verlaufende Drehachse ist dabei ebenfalls im Wesentlichen parallel zu dem Untergrund angeordnet. Dadurch dass die Drehachse zum Verschwenken des Messersatzes erfindungsgemäß zumindest annähernd in der Schneidebene liegt, wird beim Verschwenken des Messersatzes um die Drehachse um 180° der Abstand der Schneidebene von dem Untergrund nur gering variiert. Zwischen einem maximalen Abstand der Schneidebene von dem Untergrund und einem minimalen Abstand kann ein Mittelwert als mittlerer Abstand definiert werden. Als geringe Variation des Abstands wird dabei eine Differenz verstanden, die weniger als 60%, insbesondere weniger als 30% des mittleren Abstandes beträgt.

Das feststehende und das bewegbare Messer weisen an der die beiden Messer verbindenden Schwenkachse eine Lücke mit einem axialen Abstand auf, welcher bei der Bewegung des bewegbaren Messers auch gegenüber einem Maximalwert variieren kann. Vorteilhafterweise liegt die im Wesentlichen senkrecht zur Schwenkachse verlaufende Drehachse um maximal den Betrag dieses Abstandes bzw. dessen Maximalwerts in Richtung der Schwenkachse außerhalb dieser Lücke. Vorzugsweise verläuft die Drehachse innerhalb dieser Lücke.

In einer Ausgestaltung des Messerantriebs ist die Drehachse zumindest teilweise, insbesondere im Bereich der Lagervorrichtung, zwischen dem bewegbaren Messer und dem feststehenden Messer angeordnet. Das bewegbare Messer, insbesondere dessen Schneidkante, kann, wie bereits erwähnt, zumindest im geöffneten Zustand des Messersatzes mit dem feststehenden Messer einen Winkel einschließen, wobei das bewegbare Messer folglich auch mit der Drehachse einen Winkel einschließt. Zumindest im Bereich der Lagervorrichtung ist jedoch die Drehachse zwischen den Messern angeordnet. Dadurch wird erreicht, dass die Drehachse zumindest annähernd in der Schneideebene liegt.

In einer weiteren Ausgestaltung umfasst der Messerantrieb einen Antriebsmechanismus, wobei das bewegbare Messer über eine Befestigungsstelle mit dem Antriebsmechanismus wirkverbunden ist und die Befestigungsstelle so angeordnet ist, dass bei einer Krafteinleitung an der Befestigungsstelle eine Schneidkante des bewegbaren Messer in Richtung einer Schneidkante des feststehenden Messers gezwungen wird. Dadurch wird eine Anlage der Schneidkanten bei Krafteinleitung und damit eine Schneidleistung erhöht.

In einer weiteren Ausgestaltung des Messerantriebs umfasst der Antriebsmechanismus eine Zugstange, durch die das bewegbare Messer verschwenkbar ist. Ein Antrieb der Zugstange erfolgt in einer Ausgestaltung über ein flexibles Zugelement, wobei das flexible Zugelement mit einem Handhebel koppelbar ist. Das flexible Zugelement ist vorzugsweise ein Zugseil, insbesondere ein Stahlseil. Das Zugseil kann umgelenkt sein und auch nach Art eines Bowdenzugs in einer Hülle geführt sein. In anderen Ausgestaltungen kann eine Zugstange motorisch, insbesondere elektromotorisch angetrieben werden.

In einer Weiterbildung des Messerantriebs ist die Zugstange an einer Befestigungsstelle zwischen dem feststehenden Messer und dem bewegbaren Messer angeordnet. Durch diese Anordnung der Zugstange kann auf einfache Weise eine geeignete Krafteinleitung erzielt werden.

In einer weiteren Ausgestaltung der Erfindung ist die Zugstange zumindest teilweise koaxial zu der Drehachse angeordnet. Eine Zugstange zum Einleiten einer Kraft zum Verschwenken eines bewegbaren Messers relativ zu einem feststehenden Messer weist in einer Ausgestaltung zwei parallele Achsen auf, wobei eine der Achsen koaxial zu der Drehachse angeordnet ist, während die zweite parallel dazu angeordnet ist, um so eine Krafteinleitung an dem bewegbaren Messer an einer geeigneten Stelle zu realisieren.

In einer weiteren Ausgestaltung des Messerantriebs ist eine Lagerbuchse vorgesehen, in welcher die Zugstange verschwenkbar lagerbar ist. Die Zugstange ist so mit dem Messersatz um die Drehachse verschwenkbar.

In einer weiteren Ausgestaltung des Messerantriebs ist die Schwenkachse in Schneidrichtung zwischen den Schneidkanten der Messer und der Befestigungsstelle angeordnet. Eine derartige Anordnung ermöglicht eine zuverlässige Krafteinleitung beim Schließen des Messersatzes.

In einer weiteren Ausgestaltung des Messerantriebs ist das bewegbare Messer durch ein Zwangsmittel, insbesondere eine Feder, belastet, so dass eine Schneidkante des bewegbaren Messers in Richtung der Schneidkante des feststehenden Messers gezwungen ist. Durch das Zwangsmittel wird eine Anlage an den Schneidkanten entgegen einwirkender Kräfte an den Schneidkanten beim Schneiden verbessert.

Die Aufgabe wird weiter durch eine Grasschere mit einem Messerantrieb gelöst, welche einen Messersatz mit einem feststehenden Messer und einem bewegbaren Messer und eine Lagervorrichtung umfasst, wobei der Messersatz mittels der Lagervorrichtung um eine im Wesentlichen parallel zu einer Schneidebene angeordnete, in eine Schneidrichtung gerichtete Drehachse schwenkbar gelagert ist und die Drehachse zumindest annähernd in der Schneidebene liegt.

Eine derartige Grasschere, insbesondere eine Handgrasschere oder eine Stiel-Grasschere, ist auf einfache Weise in beliebigen Schneidrichtungen unter Aufsetzen auf einem Untergrund einsetzbar, wobei eine Schneidebene und damit eine Schnitthöhe des geschnittenen Grases oder dergleichen, im Wesentlichen unabhängig von einer Schneidrichtung ist. Kleinere Abweichungen in der Schnitthöhe sind dabei zumindest bei unebenen Böden tolerierbar. Je nach zu erzielender absoluter Schnitthöhe können dabei auch Abweichungen von bis zu 30% von einer mittleren Schnitthöhe für einen Nutzer kaum sichtbar und somit tolerierbar sein.

In einer Ausgestaltung der Grasschere ist der Messersatz mittels der Lagervorrichtung an einem Gehäuse der Grasschere um die Drehachse verschwekbar gelagert. In einer Ausgestaltung umfasst die Lagervorrichtung ein Messergehäuse, in welchem der Messersatz gelagert ist, wobei das Messergehäuse über ein rotatives Gleitlager in dem Gehäuse gelagert ist.

In einer Ausgestaltung der Grasschere ist das bewegbare Messer mittels eines Handhebels verschwenkbar. Der Handhebel ist dabei vorzugsweise bezüglich eines feststehenden Griffteils, an welchem das feststehende Messer gelagert ist, bewegbar. Die Bewegung des Handhebels wird über geeignete Kopplungsmittel in eine Bewegung des bewegbaren Messers umgesetzt. Die Kopplungsmittel umfassen in einer Ausgestaltung der Erfindung eine Zugstange, wobei die Zugstange vorzugsweise mit dem Messersatz drehbar ist und/oder ein flexibles Zugelement.

In einer weiteren Ausgestaltung der Grasschere ist die Grasschere an einer Bezugsebene auf einen Untergrund aufsetzbar ist. Die Grasschere ist beispielsweise als Handgrasschere ausgebildet, wobei ein unterer Gehäuseboden auf einem Untergrund aufsetzbar ist. In anderen Ausgestaltungen sind an einem Gehäuse Rollen oder Kufen vorgesehen, mit welchen die Grasschere auf einem Untergrund aufsetzbar ist. Die Aufstandsfläche und/oder der Gehäuseboden definieren dabei eine Bezugsebene.

In einer weiteren Ausgestaltung der Grasschere variiert bei einem Verschwenken des Messersatzes um ca. 180° der Abstand der Schneidebene von der Bezugsebene um weniger als 60%, bevorzugt weniger als 40%, besonders bevorzugt weniger 30%, bezogen auf einen mittleren Abstand.

Weitere Vorteile der Erfindung ergeben sich aus der nachfolgenden Beschreibung von Ausführungsbeispielen der Erfindung, die in den Zeichnungen schematisch dargestellt sind. Für gleiche oder ähnliche Bauteile werden in den Zeichnungen einheitliche Bezugszeichen verwendet. Sämtliche aus den Ansprüchen, der Beschreibung oder den Zeichnungen hervorgehende Merkmale und/oder Vorteile, einschließlich konstruktive Einzelheiten, räumliche Anordnungen und Verfahrensschritte, können sowohl für sich als auch in den verschiedensten Kombinationen erfindungswesentlich sein. Als Teil eines Ausführungsbeispiels beschriebene oder dargestellte Merkmale können ebenso in einem anderen Ausführungsbeispiel verwendet werden, um eine weitere Ausführungsform der Erfindung zu erhalten.

In den Zeichnungen zeigen:
- Fig. 1:: eine Seitenansicht einer Grasschere mit einem erfindungsgemäßen Messerantrieb;
- Fig. 2:: eine geschnittene Darstellung der Seitenansicht der Grasschere gemäß Fig. 1;
- Fig. 3:: eine geschnittene Darstellung der Seitenansicht der Grasschere gemäß Fig. 2, wobei ein Messersatz um 180° verschwenkt ist;
- Fig. 4:: eine geschnittene Teilansicht des Messersatzes gemäß Fig. 2 und
- Fig. 5:: einen Ausschnitt einer Draufsicht auf den Messersatz gemäß Fig. 4.

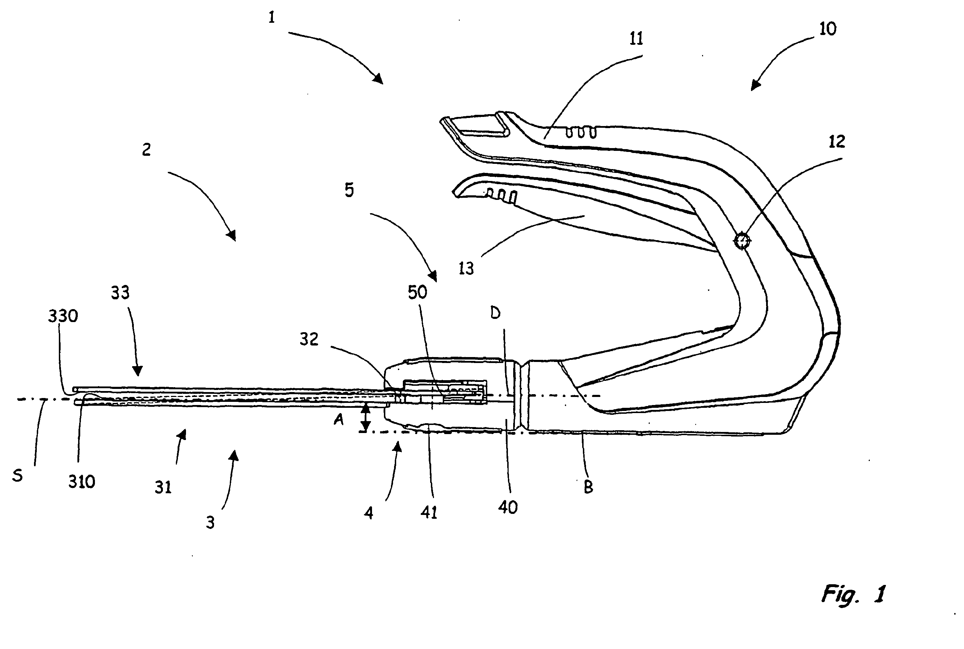

Figur 1 zeigt schematische eine Seitenansicht einer Grasschere 1. Die Grasschere 1 weist ein Gehäuse 10 mit einem feststehenden Griffelement 11 und einem über eine Achse 12 schwenkbar an dem feststehenden Griffelement angelegten bewegbaren Handhebel 13. Die Grasschere 1 umfasst einen Messerantrieb 2 mit einem Messersatz 3 und einer Lagervorrichtung 4. Der Messersatz 3 weist ein feststehendes Messer 31 und ein über eine Schwenkachse 32 schwenkbar mit dem feststehenden Messer 31 verbundenes, bewegbares Messer 33. Das bewegbare Messer 33 ist über nur teilweise sichtbare Kopplungselemente 5 umfassend eine Zugstange 50 mit dem bewegbaren Handhebel 13 verbunden, so dass eine Schwenkbewegung des Handhebels 13 um die Achse 12 in eine Schwenkbewegung des bewegbaren Messers 33 um die Schwenkachse 32 umgesetzt wird.

In der dargestellten Abbildung sind für eine bessere Darstellung das feststehende Messer 31 und das bewegbare Messer 33 voneinander beabstandet dargestellt. Tatsächlich wird das bewegbare Messer 33 durch eine nicht dargestellt Feder derart belastet, dass es mit dem feststehenden Messer 31, wie schematisch durch eine gestrichelte Linie angedeutet, im geöffneten Zustand einen Winkel einschließt und beim Schließen des Messersatzes eine Schneidkante 330 des bewegbaren Messers 33 an einer Schneidkante 310 des feststehenden Messers 31 entlang gleitet, so dass das bewegbare Messer 33 nach und nach aus der schematisch durch gestrichelte Linien dargestellten, schrägen Stellung in eine zu den feststehenden Messer 31 parallele Ausrichtung gedrängt wird. Durch eine daraus resultierende Krafteinwirkung kann das feststehende Messer 31 durchgebogen werden. Diese Durchbiegung ist jedoch üblicherweise vernachlässigbar. Die Schneidkante 310 des feststehenden Messers 31 entspricht daher zumindest annähernd einer parallel zu einer Bezugsebene B liegenden Schneidebene S. Die Bezugsebene B ist dabei durch einen Boden des Gehäuses 10 definiert, welcher auf einem Untergrund beim Schneiden direkt aufsetzbar ist. In anderen Ausgestaltungen sind Rollen oder dergleichen an dem Gehäuse 10 angeordnet, wobei die Bezugsebene dabei auch durch die Aufstandspunkte an den Rollen definiert werden kann.

Der Messersatz 3 ist mittels der Lagervorrichtung 4 um eine parallel zu der Schneidebene S angeordnete Drehachse D schwenkbar gelagert, wobei ein Abstand zwischen der Schneidebene S und der Drehachse D so gewählt ist, dass bei einem Verdrehen das Messersatzes 2 um die Drehachse D um einen Winkel von 180° ein Abstand A der Schneidebene S von der Bezugsebene B um nicht mehr als 60%, vorzugsweise weniger als 30% variiert, bezogen auf einen mittleren Abstand.

Der dargestellte Messersatz 3 ist in einem Messergehäuse 40 gelagert, welches in dem dargestellten Ausführungsbeispiel zweiteilig gestaltet ist. Für eine einfachere Handhabung beim Drehen ist an dem Messergehäuse 40 eine Grifffläche 41 ausgebildet. Das Messergehäuse 40 ist über ein in Fig. 1 nicht sichtbares rotatives Gleitlager in dem Gehäuse 10 verschwenkbar gelagert. Der in dem Messergehäuse 40 gelagerte Messersatz 3 ist dadurch relativ zu dem Gehäuse 10 um die Drehachse D drehbar. Dabei können nicht dargestellte Rastelemente vorgesehen sein, durch welche der Messersatz 3 in verschiedenen Winkelpositionen für eine Handhabung der Grasschere verrastbar ist.

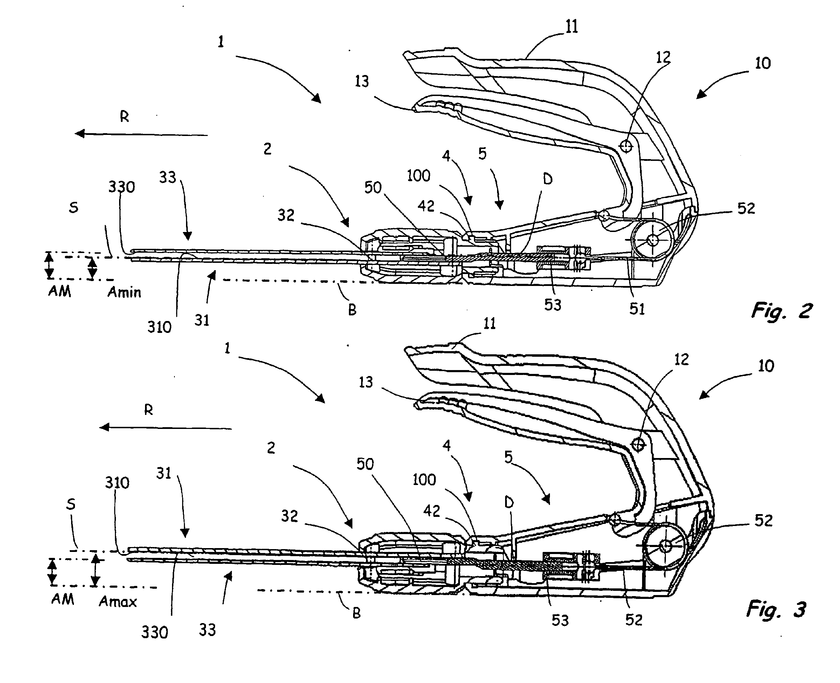

Figur 2 und 3 zeigen die Grasschere 1 gemäß Figur 1, wobei bei der Darstellung gemäß Fig. 3 der Messersatz 3 um die Drehachse D um 180° verdreht ist. Für Bauteile, welche bereits in Figur 1 dargestellt sind, werden einheitliche Bezugszeichen verwendet, und auf eine Beschreibung dieser Bauteile wird verzichtet. Wie im Vergleich zwischen Figur 2 und 3 erkennbar ist, wird durch eine Bewegung des Messersatzes 3 um die Drehachse D ein Abstand Amax, Amin der Schneidebene S von einer Bezugsebene B nur unwesentlich verändert, wobei der Abstand Amin in der Schwenkstellung gemäß Fig. 2 minimal ist und der Abstand Amax in der Schwenkstellung gemäß Fig. 3 maximal ist. Zwischen diesen Extrempositionen ist ein mittlerer Abstand AM definiert. Die Differenz zwischen dem Abstand Amax und dem Abstand Amin ist in dem dargestellten Ausführungsbeispiel kleiner als ca. 50% des mittleren Abstands AM.

Wie in Fig. 2 und 3 erkennbar, umfasst die Lagervorrichtung 4 einen Radialenvorsprung 42 an dem Messergehäuse 40 welcher in eine entsprechende Radialnut 100 des Gehäuses 10 für eine verschwenkbare Lagerung eingreift. In einer Ausgestaltung ist dabei ein Verschwenken um 360°, d. h. ein Verdrehen, oder nur ein Verschwenken um Winkel kleiner 360° möglich.

Wie in den Schnittansichten gemäß Figur 2 und 3 erkennbar ist, umfassen die Kopplungselemente zwischen dem bewegbaren Handhebel 13 und dem bewegbaren Messer 33 außer der Zugstange 50 ein mit dem bewegbaren Griffelement 13 wirkverbundenes Zugseil 51. Durch das Zugseil 51 ist eine Schwenkbewegung des Handhebels 13 in eine Verschiebung der Zugstange 50 umsetzbar. Das Zugseil 51 ist in der dargestellten Ausführungsform über eine Umlenkrolle 52 für eine verbesserte Bewegungseinleitung umgelenkt. Das Zugseil kann auch nach Art eines Bowdenzugs in einer an dem Gehäuse abgestützten Hülle geführt sein.

Das als Zugstange 50 ausgestaltete Zugmittel ist über eine als Zugpunkt gestaltete Befestigungsstelle mit dem bewegbaren Messer 33 verbunden, wobei der Zugpunkt so gewählt ist, dass bei einer Krafteinleitung an dem Zugpunkt beim Schließen des Messersatzes 3 die Schneidkante 330 des bewegbaren Messers 33 in Richtung der Schneidkante 310 des feststehenden Messers 31 gezwungen wird. Dies wird in dem dargestellten Ausführungsbeispiel dadurch erreicht, dass die Zugstange 50 im Zugpunkt zwischen dem feststehenden Messer 31 und dem bewegbaren Messer 33 angeordnet ist, wobei die Schwenkachse 32 in eine Schneidrichtung R betrachtet zwischen Schneidkanten 310, 330 der Messer 31, 33 und dem Zugpunkt angeordnet ist. Die dargestellte Zugstange 50 ist geknickt mit zwei zueinander parallelen Achsen gestaltet, um den Zugpunkt in den Bereich zwischen den Messern 31, 33 zu legen.

Die Zugstange 50 ist mittels einer Lagerbuchse 53 um die Drehachse D verschwenkbar an das Zugseil 51 angelenkt, so dass eine Kopplung des bewegbaren Messers 33 mit dem Handhebel 13 unabhängig von einer Winkelposition des Messersatzes 3 erfolgt. Die Lagerbuchse 53 ist in dem Gehäuse 10 verschieblich gelagert, um so eine Bewegung des Zugseils 51 auf die Zugstange 50 zu übertragen.

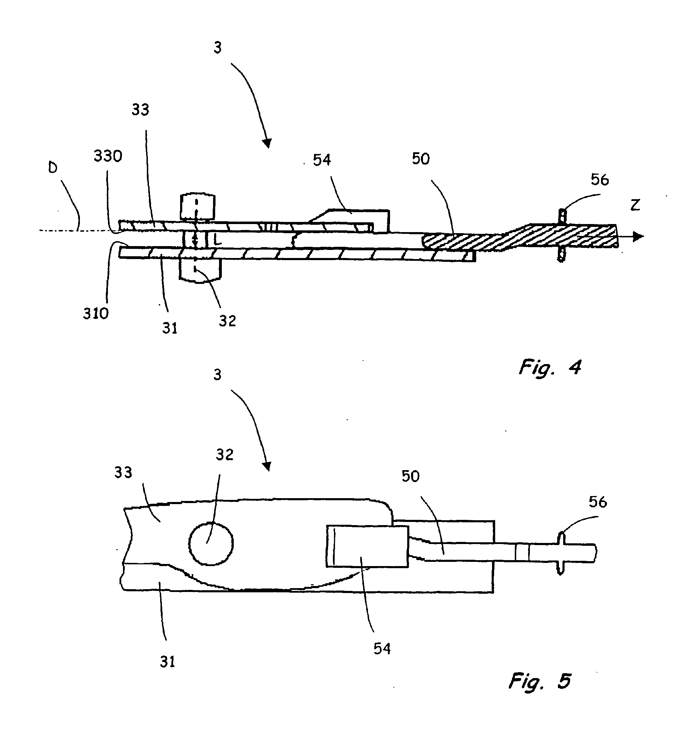

Figur 4 und 5 zeigen schematische Teilansichten des Messersatzes 3, umfassend das feststehende Messer 31 und das über die Schwenkachse 32 mit dem feststehenden Messer 31 verbundene, bewegbare Messer 33, sowie der Zugstange 50, wobei Fig. 4 eine geschnittene Seitenansicht zeigt und Fig. 5 eine Draufsicht auf die Bauteile. Wie in Figur 4 und 5 erkennbar, ist die Zugstange 50 über ein als Winkel gestaltetes Befestigungsmittel 54 mit dem bewegbaren Messer 33 verbunden, wobei ein Zugpunkt bei Einleitung einer Zugkraft Z an der Zugstange 50 an dem bewegbaren Messer 33 zwischen den Messern 31, 33 angreift, so dass eine Kraftkomponente entsteht, welche die Messer 31, 33 an den Schneidkanten 310, 330 aneinander zwingt. Dadurch wird eine Anlage der Schneidkanten 310, 330 und somit eine Schneidleistung erhöht. Wie in Figur 4 und 5 weiter erkennbar, sind an der Zugstange 50 Rastelemente 56 vorgesehen, durch welche die Zugstange 50 zumindest in den zwei, in Figur 2 und 3 dargestellten, um 180° versetzten Winkellagen an dem Gehäuse 10 der Grasschere gemäß den Figuren 1 bis 3 verrastbar ist.

Die Messer 31, 33 sind im Bereich der Schwenkachse 32 durch eine Lücke L beabstandet, deren maximale Erstreckung in Richtung der Schwenkachse mit Lmax bezeichnet ist. Die Drehachse D, welche im Wesentlichen senkrecht zu der Schwenkachse 32 verläuft, liegt vorteilhafterweise um nicht mehr als das Maß Lmax in Richtung der Schwenkachse 32 außerhalb der Lücke L, vorzugsweise innerhalb der Lücke L.

In dem dargestellten Ausführungsbeispiel ist eine handbetriebene Handgrasschere dargestellt. Selbstverständlich ist es genauso denkbar, den dargestellten Messersatz mit einem motorischen Antrieb, insbesondere einem elektro-motorischen Antrieb zu verwenden.

In weiteren nicht dargestellten Ausführungsformen der Erfindung ist die Grasschere als Stiel-Grasschere ausgebildet, wobei eine Übertragung einer Bewegung eines Griffelements ebenfalls über ein flexibles Zugelement erfolgen kann.

Die Bezugsebene ist in dem dargestellten Ausführungsbeispiel durch eine Gehäusewand definiert. In anderen Ausgestaltungen sind an der Grasschere Rollen oder Kufen vorgesehen, wobei eine Bezugsebene durch so geschaffene Aufstandspunkte definiert werden kann.

## Patentansprüche

1. Messerantrieb für eine Grasschere (1) umfassend einen Messersatz (3) mit einem feststehenden Messer (31) und einem bewegbaren Messer (33) und eine Lagervorrichtung (4), wobei der Messersatz (3) mittels der Lagervorrichtung (4) um eine im Wesentlichen parallel zu einer Schneidebene (S) angeordnete, in eine Schneidrichtung (R) gerichtete Drehachse (D) schwenkbar gelagert ist, **dadurch gekennzeichnet, dass** die Drehachse (D) zumindest annähernd in der Schneidebene (S) liegt.

2. Messerantrieb nach Anspruch 1, **dadurch gekennzeichnet, dass** die Drehachse (D) zumindest teilweise, insbesondere im Bereich der Lagervorrichtung (4), zwischen dem bewegbaren Messer (33) und dem feststehenden Messer (31) angeordnet ist.

3. Messerantrieb nach Anspruch 1 oder 2, **gekennzeichnet durch** einen Antriebsmechanismus (50), wobei das bewegbare Messer (33) über eine Befestigungsstelle mit dem Antriebsmechanismus (50) wirkverbunden ist und die Befestigungsstelle so angeordnet ist, dass bei einer Krafteinleitung an der Befestigungsstelle eine Schneidkante (330) des bewegbaren Messer (33) in Richtung einer Schneidkante (310) des feststehenden Messers (31) gezwungen wird.

4. Messerantrieb nach Anspruch 3, **dadurch gekennzeichnet, dass** der Antriebsmechanismus eine Zugstange (50) umfasst, durch die das bewegbare Messer (33) relativ zu dem feststehenden Messer (31) um eine im Wesentlichen senkrecht auf die Schneidrichtung stehende Schwenkachse (32) verschwenkbar ist.

5. Messerantrieb nach Anspruch 4, **dadurch gekennzeichnet, dass** die Zugstange (50) an einer Befestigungsstelle zwischen dem feststehenden Messer (31) und dem bewegbaren Messer (33) angeordnet ist.

6. Messerantrieb nach Anspruch 3, 4 oder 5, **dadurch gekennzeichnet, dass** die Zugstange (50) zumindest teilweise koaxial zu der Drehachse (D) angeordnet ist.

7. Messerantrieb nach Anspruch 6, **gekennzeichnet durch** eine Lagerbuchse (53), in welcher die Zugstange (50) verschwenkbar lagerbar ist.

8. Messerantrieb nach einem der Ansprüche 3 bis 7, **dadurch gekennzeichnet, dass** das bewegbare Messer (33) relativ zu dem feststehenden Messer um die Schwenkachse (32) verschwenkbar ist und die Schwenkachse (32) in Schneidrichtung (R) zwischen den Schneidkanten (310, 330) der Messer (31, 33) und der Befestigungsstelle angeordnet ist.

9. Messerantrieb nach einem der Ansprüche 3 bis 8, **dadurch gekennzeichnet, dass** der Antriebsmechanismus ein flexibles Zugelement (51) umfasst.

10. Messerantrieb nach einem der Ansprüche 1 bis 9, **dadurch gekennzeichnet, dass** das bewegbare Messer (33) durch ein Zwangsmittel, insbesondere eine Feder, belastet ist, so dass eine Schneidkante (330) des bewegbaren Messers (33) in Richtung der Schneidkante (310) des feststehenden Messers (31) gezwungen ist.

11. Grasschere mit einem Messerantrieb (2) nach einem der Ansprüche 1 bis 10.

12. Grasschere nach Anspruch 11, **dadurch gekennzeichnet, dass** der Messersatz mittels der Lagervorrichtung (4) an einem Gehäuse der Grasschere um die Drehachse (D) verschwenkbar gelagert ist.

13. Grasschere nach Anspruch 11 oder 12, **dadurch gekennzeichnet, dass** das bewegbare Messer (33) mittels eines Handhebels (13) verschwenkbar ist.

14. Grasschere nach Anspruch 11, 12 oder 13, **dadurch gekennzeichnet, dass** die Grasschere (1) an einer Bezugsebene (B) auf einen Untergrund aufsetzbar ist, wobei die Schneidebene (S) im Wesentlichen parallel zu der Bezugsebene (B) ist.

15. Grasschere nach Anspruch 14, **dadurch gekennzeichnet, dass** bei einem Verschwenken des Messersatzes um ca. 180° ein Abstand (A) der Schneidebene (S) von der Bezugsebene (B) um weniger als 60%, bevorzugt weniger als 40%, besonders bevorzugt weniger 30%, bezogen auf einen mittleren Abstand (AM) variiert.

## Claims

1. Cutter drive for grass shears (1) comprising a cutter set (3) with a fixed cutter (31) and a movable cutter (33), and a bearing device (4), wherein the cutter set (3) is mounted by means of the bearing device (4) so as to be pivotable about a rotation axis (D) that is arranged substantially parallel to a cutting plane (S) and is directed in a cutting direction (R), **characterized in that** the rotation axis (D) is located at least approximately in the cutting plane (S).

2. Cutter drive according to Claim 1, **characterized in that** the rotation axis (D) is arranged at least partially, in particular in the region of the bearing device (4), between the movable cutter (33) and the fixed cutter (31).

3. Cutter drive according to Claim 1 or 2, **characterized by** a drive mechanism (50), wherein the movable cutter (33) is operatively connected to the drive mechanism (50) via a fastening point and the fastening point is arranged such that, in the event of a force being introduced at the fastening point, a cutting edge (330) of the movable cutter (33) is forced in the direction of a cutting edge (310) of the fixed cutter (31).

4. Cutter drive according to Claim 3, **characterized in that** the drive mechanism comprises a connecting rod (50) by way of which the movable cutter (33) is pivotable relative to the fixed cutter (31) about a pivot axis (32) located substantially perpendicularly to the cutting direction.

5. Cutter drive according to Claim 4, **characterized in that** the connecting rod (50) is arranged at a fastening point between the fixed cutter (31) and the movable cutter (33).

6. Cutter drive according to Claim 3, 4 or 5, **characterized in that** the connecting rod (50) is arranged at least partially coaxially with the rotation axis (D).

7. Cutter drive according to Claim 6, **characterized by** a bearing bush (53) in which the connecting rod (50) is mountable in a pivotable manner.

8. Cutter drive according to one of Claims 3 to 7, **characterized in that** the movable cutter (33) is pivotable about the pivot axis (32) relative to the fixed cutter, and the pivot axis (32) is arranged in the cutting direction (R) between the cutting edges (310, 330) of the cutters (31, 33) and the fastening point.

9. Cutter drive according to one of Claims 3 to 8, **characterized in that** the drive mechanism comprises a flexible traction element (51).

10. Cutter drive according to one of Claims 1 to 9, **characterized in that** the movable cutter (33) is loaded by forcing means, in particular a spring, such that a cutting edge (330) of the movable cutter (33) is forced in the direction of the cutting edge (310) of the fixed cutter (31).

11. Grass shears having a cutter drive (2) according to one of Claims 1 to 10.

12. Grass shears according to Claim 11, **characterized in that** the cutter set is mounted on a housing of the grass shears by means of the bearing device (4) so as to be pivotable about the rotation axis (D).

13. Grass shears according to Claim 11 or 12, **characterized in that** the movable cutter (33) is pivotable by means of a hand lever (13).

14. Grass shears according to Claim 11, 12 or 13, **characterized in that** the grass shears (1) are placeable onto an underlying surface in a reference plane (B), wherein the cutting plane (S) is substantially parallel to the reference plane (B).

15. Grass shears according to Claim 14, **characterized in that** when the cutter set is pivoted through about 180°, a distance (A) of the cutting plane (S) from the reference plane (B) varies by less than 60%, preferably less than 40%, particularly preferably less than 30%, with respect to a mean distance (AM).

## Revendications

1. Entraînement de lame pour des ciseaux à pelouse (1) comprenant un jeu de lames (3) avec une lame fixe (31) et une lame mobile (33) et un dispositif de palier de roulement (4), le jeu de lames (3) étant disposé de façon à pouvoir pivoter, à l'aide du dispositif de palier de roulement (4), autour d'un axe de rotation (D) disposé pour l'essentiel parallèlement à un plan de coupe (S) orienté dans une direction de coupe (R), **caractérisé en ce que** l'axe de rotation (D) repose au moins de façon approximative dans le plan de coupe (S).

2. Entraînement de lame selon la revendication 1, **caractérisé en ce que** l'axe de rotation (D) est disposé au moins en partie, notamment dans la région du dispositif de palier de roulement (4), entre la lame mobile (33) et la lame fixe (31).

3. Entraînement de lame selon la revendication 1 ou 2, **caractérisé par** la présence d'un mécanisme d'entraînement (50), la lame mobile (33) étant activement reliée au mécanisme d'entraînement (50) via un point de fixation et le point de fixation étant disposé de telle sorte qu'en cas d'application de force au niveau du point de fixation, une arête tranchante (330) de la lame mobile (33) est contrainte en direction d'une arête tranchante (310) de la lame fixe (31).

4. Entraînement de lame selon la revendication 3, **caractérisé en ce que** le mécanisme d'entraînement comprend une barre de traction (50) à travers laquelle la lame mobile (33) peut être pivotée, par rapport à la lame fixe (31), autour d'un axe de pivotement (32) pour l'essentiel perpendiculaire à la direction de coupe.

5. Entraînement de lame selon la revendication 4, **caractérisé en ce que** la barre de traction (50) est disposée au niveau d'un point de fixation, entre la lame fixe (31) et la lame mobile (33).

6. Entraînement de lame selon la revendication 3, 4 ou 5, **caractérisé en ce que** la barre de traction (50) est disposée au moins en partie dans le plan coaxial par rapport à l'axe de rotation (D).

7. Entraînement de lame selon la revendication 6, **caractérisé par** la présence d'une douille de palier de roulement (53) dans laquelle la barre de traction (50) peut être disposée de façon à pouvoir pivoter.

8. Entraînement de lame selon l'une quelconque des revendications 3 à 7, **caractérisé en ce que** la lame mobile (33) peut pivoter, par rapport à la lame fixe, autour de l'axe de pivotement (32) et que l'axe de pivotement (32) est disposé dans la direction de coupe (R), entre les arêtes tranchantes (310, 330) des lames (31, 33) et le point de fixation.

9. Entraînement de lame selon l'une quelconque des revendications 3 à 8, **caractérisé en ce que** le mécanisme d'entraînement est un élément de traction (51) flexible.

10. Entraînement de lame selon l'une quelconque des revendications 1 à 9, **caractérisé en ce que** la lame mobile (33) est sollicitée par un moyen de contrainte, notamment un ressort, de sorte qu'une arête tranchante (330) de la lame mobile (33) est contrainte en direction de l'arête tranchante (310) de la lame fixe (31).

11. Ciseaux à pelouse avec un entraînement de lame (2) selon l'une quelconque des revendications 1 à 10.

12. Ciseaux à pelouse selon la revendication 11, **caractérisés en ce que** le jeu de lames est disposé de façon à pouvoir pivoter, à l'aide du dispositif de palier de roulement (4) prévu au niveau d'un carter des ciseaux à pelouse, autour de l'axe de rotation (D).

13. Ciseaux à pelouse selon la revendication 11 ou 12, **caractérisés en ce que** la lame mobile (33) peut être pivotée à l'aide d'un levier à main (13).

14. Ciseaux à pelouse selon la revendication 11, 12 ou 13, **caractérisés en ce que** les ciseaux à pelouse (1) peuvent être placés, au niveau d'un plan de référence (B), sur un support, le plan de coupe (S) étant pour l'essentiel parallèle au plan de référence (B).

15. Ciseaux à pelouse selon la revendication 14, **caractérisés en ce qu'**en cas de pivotement du jeu de lames d'environ 180°, un écartement (A) du plan de coupe (S) par rapport au plan de référence (B) varie de moins de 60 %, de façon préférée de moins de 40 %, de façon particulièrement préférée de moins de 30 %, par rapport à un écartement moyen (AM).
